# EUROPÄISCHE PATENTSCHRIFT

(11) **EP 0 530 254 B1**
(45) Veröffentlichungstag und Bekanntmachung des Hinweises auf die Patenterteilung: **03.08.1994**
(21) Anmeldenummer: 91909659.4
(22) Anmeldetag: 21.05.1991
(51) Int. Cl.: G01B 17/00, G01B 17/02

(54) **ULTRASCHALL-MESSEINRICHTUNG ZUR PRÜFUNG DER RUNDHEIT EINES KÖRPERS**
ULTRASONIC MEASUREMENT DEVICE FOR TESTING THE ROUNDNESS OF A BODY
DISPOSITIF DE MESURE ULTRASONIQUE UTILE POUR CONTROLER LA ROTONDITE D'UN CORPS

(30) Priorität: 21.05.1990 DE 9005754 U
(43) Veröffentlichungstag der Anmeldung: 10.03.1993
(73) Patentinhaber: SIEMENS AKTIENGESELLSCHAFT, 80333 München (DE)
(72) Erfinder: SCHMID, Rudi, D-8551 Hemhofen (DE); ROPERS, Johann, D-8520 Erlangen (DE)
(86) Internationale Anmeldenummer: DE9100411
(87) Internationale Veröffentlichungsnummer: WO9118260

(56) Entgegenhaltungen:
- DE-A- 2 358 207
- DE-A- 3 525 946
- GB-A- 1 149 602
- US-A- 3 798 959
- US-A- 4 161 885
- US-A- 4 385 522

## Beschreibung

Die Erfindung bezieht sich auf eine Ultraschall-Meßeinrichtung zur Prüfung der Rundheit eines Körpers, insbesondere eines Brennelement-Zentrierstiftes.

Brennelement-Zentrierstifte müssen in regelmäßigen Abständen auf ihre Rißfreiheit geprüft werden. Befundbehaftete Stifte werden dann ausgebaut und durch neue Stifte ersetzt. Dabei hat sich gezeigt, daß am Zentrierschaft der Stifte teilweise ein Verschleiß durch Materialabtrag stattfindet. Dieser Verschleiß ist unsymmetrisch und kann bis zu 0,6 mm betragen. Damit die Belastung der nicht ausgetauschten Stifte nicht geändert wird, sollten die neu eingebauten Stifte verschleißorientierte Zentrierdurchmesser haben. Der Verschleiß und die Unrundheit der Zentrierstifte müssen somit vor dem Austausch im eingebauten Zustand gemessen werden.

Aus der US-A-4 161 885 ist eine Meßeinrichtung zum Messen des Abstandes zweier Walzen bekannt, bei dem der Abstand zwischen den beiden Walzen durch eine mechanische Tasteinrichtung in eine Laufstrecke zwischen einem axial verschiebbar gelagerten Ultraschallsender, einer fest mit dem Lagergehäuse einer Walze verbundenen Reflexionsfläche und einem den Ultrschallsender ringförmig umgebenden Ultraschallempfänger erfaßt wird. Zur Messung der Rundheit der Oberflächenkontur eines Körpers ist die bekannte Einrichtung jedoch nicht geeignet.

Zur Messung der Rundheit und des Verschleißes am Zentriershaft ist es bekannt, die Stifte in Durchmesserrichtung mit Ultraschall zu durchschallen. Dazu wird ein Ultraschallwandler auf die Oberfläche des Zentrierstiftes aufgesetzt. Die Messung des Durchmessers wird durch ein Impuls-Echo-Verfahren durchgeführt. Die Laufzeit des an der dem Ultraschallwandler diametral gegenüberliegenden Oberfläche reflektierten Ultraschalls ist dann ein Maß für den Stiftdurchmesser und damit für den Verschleiß. Nach Messung dieses Durchmessers wird der Ultraschallwandler in Umfangsrichtung verfahren und erneut gemessen. Mit der bekannten Vorrichtung kann jedoch aufgrund von Ankoppelschwankungen und den damit verbundenen Verschlechterungen der Empfangssignale eine Genauigkeit, die besser als 0,1 mm ist, nicht erzielt werden.

Der Erfindung liegt somit die Aufgabe zugrunde, eine verbesserte Meßeinrichtung zur Prüfung der Rundheit der Oberflächenkontur eines Körpers anzugeben.

Die genannte Aufgabe wird gelöst mit den Merkmalen des Hauptanspruches. Eine Ultraschall-Meßeinrichtung zur Prüfung der Rundheit der Oberflächenkontur eines Körpers enthält eine um den Körper drehbare Meßzelle, eine in der Meßzelle angeordnete auslenkbare mechanischen Tasteinrichtung zur Umwandlung der Oberflächenkontur in eine Auslenkung einer an der Tasteinrichtung angeordneten Reflexionsfläche und einen gegenüber der Reflexionsfläche in der Meßzelle starr angeordneten Ultraschall-Prüfkopf. Da die Meßeinrichtung eine mit einer Reflexionsfläche versehene mechanische Tasteinrichtung enthält, mit der die Oberflächenkontur des Prüflings in eine mechanische Auslenkung dieser Reflexionsfläche umgewandelt wird, und gegenüber der Reflexionsfläche ein Ultraschall-Prüfkopf angeordnet ist, werden eindeutige Reflexionsbedingungen geschaffen, die auch die Auswertung von Mehrfachechos ermöglichen. Dadurch wird die Genauigkeit erhöht. Da die Oberflächenkontur durch eine mechanische Tasteinrichtung nachgefahren wird, kann durch eine entsprechende mechanische Übersetzung die Empfindlichkeit der Meßeinrichtung nochmals erhöht werden.

In einer vorteilhaften Ausgestaltung der Erfindung sind Mittel zum Anlegen der Meßzelle an einen der Tasteinrichtung gegenüberliegenden Oberflächenbereich des Körpers vorgesehen.

Vorzugsweise ist als mechanische Tasteinrichtung ein um eine parallel zur Drehachse der Drehbewegung des Gehäuses schwenkbar und federnd gelagerter und mit einem Taststift an die Oberfläche des Körpers anlegbarer Fühlhebel vorgesehen. Die mechanische Übersetzung kann dann durch das Verhältnis aus dem Abstand zwischen Taststift und Drehpunkt des Fühlhebels und dem Abstand zwischen Drehpunkt und Reflexionsfläche eingestellt werden.

Eine weitere bevorzugte Ausführungsform der Erfindung enthält eine mechanische Tasteinrichtung mit einem linear verschiebbaren Fühlelement. Dadurch wird stets eine Parallelität zwischen Reflexionsfläche und Sendefläche des Ultraschallwandlers gewährleistet.

Zur weiteren Erläuterung der Erfindung wird auf die Ausführungsbeispiele der Zeichnung verwiesen, in deren

FIG 1 und 2 eine Meßeinrichtung gemäß der Erfindung in einem Querschnitt bzw. einem Längsschnitt schematisch veranschaulicht ist.

FIG 3 zeigt eine weitere vorteilhafte Ausgestaltung der Meßeinrichtung mit einer parallel verschiebbaren Tasteinrichtung.

In FIG 4 ist schematisch ein mit der Meßeinrichtung ermitteltes Echogramm mit Mehrfachechos dargestellt.

In FIG 5 ist die mit einer Meßeinrichtung gemäß der Erfindung ermittelte Abweichung von der Rundheit des in Figur 1 dargestellten Zentrierstiftes in Abhängigkeit von der Winkelposition der Meßeinrichtung aufgetragen.

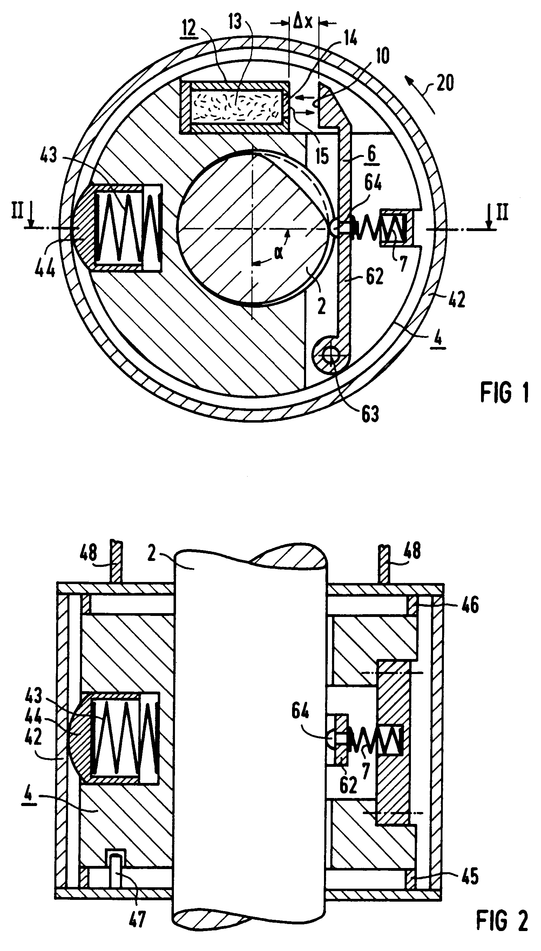

Gemäß **FIG 1** ist zur Messung der Rundheit eines Brennelement-Zentrierstiftes 2 eine Ultraschall-Meßeinrichtung vorgesehen, die eine in einer Meßzelle 4 angeordnete Tasteinrichtung 6 enthält. Als Tasteinrichtung 6 ist im Beispiel der Figur ein schwenkbar und federnd gelagerter Fühlhebel 62 vorgesehen. Der Fühlhebel 62 ist mit einem Taststift 64 versehen und wird über eine in der Meßzelle 4 befestigte Feder 7 an die Oberfläche des Zentrierstiftes 2 angedrückt. An seinem freien Ende ist der Fühlhebel 62 mit einer ebenen Reflexionsfläche 10 versehen. Gegenüber dieser Reflexionsfläche 10 ist in der Meßzelle 4 ein Ultraschall-Prüfkopf 12 angeordnet. Der Ultraschall-Prüfkopf 12 ist starr in der Meßzelle 4 fixiert. Er enthält einen auf einem Dämpfungskörper 13 angeordneten Ultraschallwandler 14, dessen Sende- und Empfangsfläche 15 der Reflexionsfläche 10 zugewandt ist. Zwischen dem Ultraschallwandler 14 und der Reflexionsfläche 10 befindet sich ein schalltragendes Medium, beispielsweise Wasser. Der Abstand Δ x zwischen der Sendefläche 15 und der Reflexionsfläche 10 kann durch eine Impuls-Echo-Laufzeitbestimmung gemessen werden.

Die Meßzelle 4 ist in einem zylindrischen Gehäuse 42 gelagert, dessen Stirnflächen jeweils mit einer Bohrung zur Aufnahme des Zentrierstiftes 2 versehen sind. Das Gehäuse 42 kann gemeinsam mit der Meßzelle 4 über den Zentrierstift 2 geschoben werden und bewirkt eine Vorzentrierung der Meßzelle 4. Die Meßzelle 4 ist im Gehäuse 42 axial fixiert und in einer radialen Richtung federnd gelagert. Hierzu ist gegenüber dem Taststift 64 ein durch eine Feder 43 belasteter Druckstempel 44 vorgesehen, der die Meßzelle 4 vom Gehäuse 42 wegdrückt und an den dem Auflagepunkt des Taststiftes 64 auf dem Zentrierstift 2 gegenüberliegenden Oberflächenbereich des Zentrierstiftes 2 anlegt. Im Beispiel der Figur ist eine Meßzelle 4 dargestellt, die eine hohlzylindrische Aufnahme für den Zentrierstift 2 hat. Der Durchmesser dieser Aufnahme ist geringfügig größer als der maximale Durchmesser des Zentrierstiftes 2. Anstelle einer hohlzylindrischen Aufnahme kann auch eine Aufnahme mit rechteckigem Querschnitt vorgesehen sein, so daß sich die Meßzelle 4 unter der Wirkung des federbelasteten Druckstempels 44 mit einer geraden Kante an den Zentrierstift anlegt. Da der Ultraschall-Prüfkopf 12 starr mit der Maßzelle 4 verbunden ist, wird durch das Anlegen der Maßzelle 4 an den dem Auflagepunkt des Taststiftes 64 gegenüberliegenden Oberflächenbereich auf einfache Weise ein Bezugspunkt für eine Absolutmessung des Durchmessers des Zentrierstiftes 2 festgelegt.

Das Gehäuse 42 kann gemeinsam mit der Meßzelle 4 um den Zentrierstift 2 gedreht werden. Der Taststift 64 folgt dann der Oberflächenkontur des Zentrierstiftes 2. Durch Verschleiß verursachte Abweichungen von der Rundheit bewirken dann eine Auslenkung der Reflexionsfläche 10 des Fühlhebels 6. In der Figur ist ein Zentrierstift 2 cargestellt, dessen Oberflächenkontur von der idealen, gestrichelt gezeichneten Rundheit abweicht. Bei einer Drehung der Maßeinrichtung in Richtung des Pfeiles 20 wird der Taststift 64 des Fühlhebels 62 zunehmend nach innen gedrückt. Der Abstand Δ x zwischen Reflexionsfläche 10 und Sende- und Empfangsfläche 15 des Ultraschallwandlers 14 verringert sich. Entsprechend verringert sich der zeitliche Abstand zwischen Sende impuls und Echosignal. Der in Abhängigkeit von der Winkelposition α der Meßeinrichtung gemessene Abstand Δ x ist dann ein Maß für den Verschleiß des Zentrierstiftes 2. Da die Reflexions- und Ausbreitungsbedingungen für die in der Figur durch Pfeile dargestellten Ultraschallwellen nahezu ungestört und eindeutig sind, und Fehler durch mangelhafte Ankopplung des Ultraschallwandlers an den Prüfling nicht auftreten können, können auch Mehrfach-Echofolgen ausgenutzt werden. Bei einer Ausnutzung von beispielsweise fünffach an der Reflexionsfläche 10 reflektierten Echos kann die Genauigkeit um den Faktor 5 gesteigert werden. Eine Erhöhung der Genauigkeit kann auch durch eine entsprechende mechanische Übersetzung des Fühlhebels 62 erreicht werden. Im Beispiel der Figur ist ein schwenkbar um eine parallel zur Drehachse der Meßzelle 4 orientierte Achse 63 gelagerter Fühlhebel 62 vorgesehen, dessen Reflexionsfläche 10 am freien Ende des Fühlhebels 62 angeordnet ist und dessen Taststift 64 sich in der Mitte zwischen Achse 63 und Reflexionsfläche 10 befindet. Die Übersetzung beträgt dann den Faktor 2, so daß sich insgesamt eine Verbesserung der Meßgenauigkeit um den Faktor 10 ergibt.

Entsprechend **FIG 2** ist die Meßzelle 4 im Gehäuse 42 über Abstandsbuchsen 45 und 46 axial gelagert. Das Gehäuse 42 ist über Befestigungselemente 48 an einem in der Figur nicht dargestellten Manipulator gekoppelt, mit dem das Gehäuse 42 um den Zentrierstift 2 gedreht werden kann. Durch einen am Gehäuse 42 angeordneten Mitnehmerstift 47, der in eine Ausnehmung der Meßzelle 4 ragt, wird die Drehbewegung des Gehäuses 42 auf die Meßzelle 4 übertragen. Für die Ausnehmung ist ein radiales Spiel vorgesehen, das so groß bemessen ist, daß bei auf dem Zentrierstift 2 aufgesetzten Gehäuse 42 über den Mitnehmerstift 47 keine radialen Kräfte auf die Meßzelle ausgeübt werden.

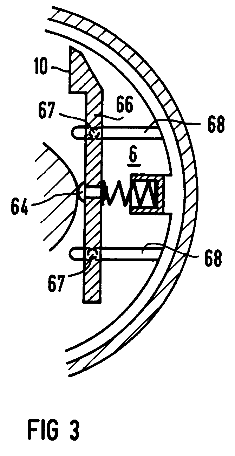

Im Ausführungsbeispiel gemäß **FIG 3** ist eine Tasteinrichtung 6 vorgesehen, bei der beim Drehen der Meßzelle 4 die Oberflächenkontur des Zentrierstiftes 2 über den Taststift 64 in eine Parallelverschiebung der Reflexionsfläche 10 umgewandelt wird. Hierzu ist ein Fühlelement 66 in Form eines linear verschiebbaren und federnd gelagerten Balkens vorgesehen, der mit seitlich angeordneten Führungsstiften 67 in mehreren parallel zueinander in der Meßzelle 4 angeordneten Nuten 68 gelagert ist. Dadurch ist stets eine Parallelität zwischen Reflexionsfläche 10 und Sende- und Empfangsfläche 15 gewährleistet und die Meßgenauigkeit bei der Auswertung von Mehrfachechos erhöht.

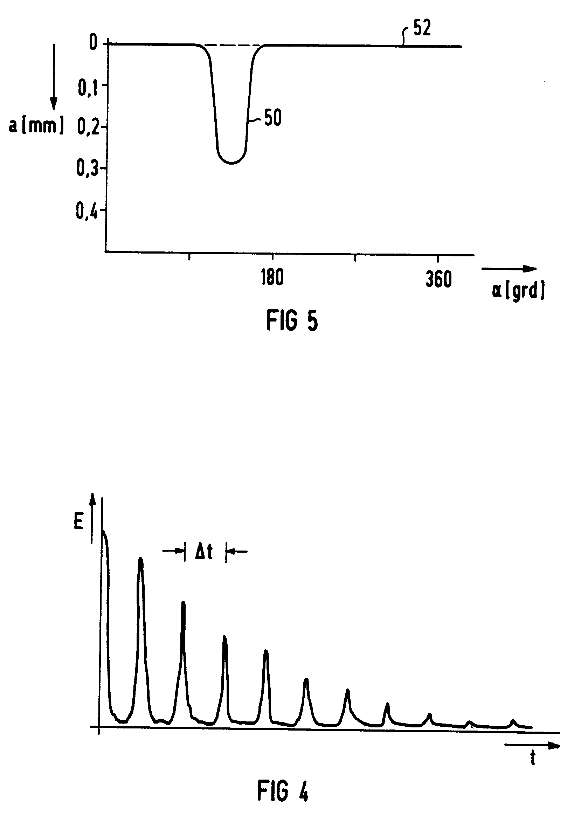

In **FIG 4** sind die vom Ultraschallwandler 14 (Figur 1) empfangenen Echosignale E gegen die Zeit t aufgetragen. Der zeitliche Abstand Δ t zwischen zwei aufeinanderfolgenden Echoimpulsen entspricht dann dem Abstand Δ x zwischen Sende- und Empfangsfläche 15 und Reflexionsfläche 10. In der Figur ist zu erkennen, daß eine Auswertung bis zum 10. Echo möglich ist. Die auf diese Weise bei einem Durchmesser des Ultraschallwandlers 14 von etwa 3 mm, einer Prüffrequenz von 6 MHz und einem mittleren Abstand Δ x von etwa 5 mm erzielbare Maßgenauigkeit ist besser als 10 µm.

**FIG 5** zeigt das Ergebnis einer Rundheitsprüfung an einem Zentrierstift mit einem unsymmetrischen Abtrag wie er beispielsweise in Figur 1 dargestellt ist. Der Abtrag a ist dort gegen die Winkelposition des Taststiftes aufgetragen. Der Abtrag a ergibt sich als Abweichung 50 des zwischen der Reflexionsfläche und der Sendefläche gemessenen Abstandes Δ x von einer geraden Sollinie 52. In der Figur ist zu erkennen, daß die Abweichung 50 im Bereich zwischen 90° und 180° vorliegt und bis zu etwa 0,3 mm beträgt.

In einer Meßzelle können auch mehrere jeweils einen Ultraschallwandler und eine Reflexionsfläche enthaltende Meßsysteme vorgesehen sein, mit denen die Rundheit eines zylindrischen Körpers gleichzeitig in unterschiedlichen Höhen gemessen werden kann.

## Patentansprüche

1. Ultraschall-Meßeinrichtung zur Prüfung der Rundheit der Oberflächenkontur eines Körpers (2) mit einer Meßzelle (4), die zum Aufschieben auf den Körper (2) mit einer Aufnahme für den Körper (2) versehen ist und um den Körper (2) drehbar ist, einer in der Meßzelle (4) angeordneten auslenkbaren mechanischen Tasteinrichtung (6) zur Umwandlung der Oberflächenkontur in eine Auslenkung einer an der Tasteinrichtung (6) angeordneten Reflexionsfläche (10) und einem gegenüber der Reflexionsfläche (10) in der Meßzelle (4) starr angeordneten Ultraschall-Prüfkopf (12).

2. Ultraschall-Meßeinrichtung nach Anspruch 1, **dadurch gekennzeichnet**, daß Mittel (42, 43, 44) zum Anlegen der Meßzelle (4) an einen der Tasteinrichtung (6) gegenüberliegenden Oberflächenbereich des Körpers (2) vorgesehen sind.

3. Ultraschall-Maßeinrichtung nach Anspruch 1 oder 2, **dadurch gekennzeichnet**, daß die mechanische Tasteinrichtung (6) einen Fühlhebel (62) umfaßt, der mit einem Taststift (64) an die Oberfläche des Körpers (2) anlegbar ist und der federnd um eine parallel zur Drehachse der Drehbewegung der Meßzelle (4) liegende Achse (63) schwenkbar gelagert ist.

4. Ultraschall-Meßeinrichtung nach Anspruch 1 oder 2, **dadurch gekennzeichnet**, daß die Tasteinrichtung (6) ein linear verschiebbares Fühlelement (66) umfaßt.

5. Ultraschall-Meßeinrichtung nach Anspruch 4, **dadurch gekennzeichnet**, daß das Fühlelement (66) linear verschiebbar in Nuten (68) der Meßzelle (4) gelagert ist.

## Claims

1. Ultrasonic measuring device for testing the roundness of the surface contour of a body (2), said device having a measuring cell (4) which for the purpose of being slipped onto the body (2) is provided with a receptacle for the body (2) and can be rotated about the body (2), a mechanical scanning device (6), which is arranged in the measuring cell (4) and can be deflected, for the conversion of the surface contour into a deflection of a reflection surface (10) which is arranged on the scanning device (6), and an ultrasonic test head (12) which is rigidly arranged opposite the reflection surface (10) in the measuring cell (4).

2. Ultrasonic measuring device according to claim 1, characterised in that means (42, 43, 44) are provided for the purpose of applying the measuring cell (4) to a surface area of the body (2) that lies opposite the scanning device (6).

3. Ultrasonic measuring device according to claim 1 or 2, characterised in that the mechanical scanning device (6) comprises a feeler lever (62) which with a scanning pin (64) can be applied to the surface of the body (2) and which is mounted in a resilient manner such that it can be swung about an axis (63) which lies parallel to the rotational axis of the movement of rotation of the measuring cell (4).

4. Ultrasonic measuring device according to claim 1 or 2, characterised in that the scanning device (6) comprises a feeler element (66) which can be displaced linearly.

5. Ultrasonic measuring device according to claim 4, characterised in that the feeler element (66) is mounted such that it can be displaced linearly in grooves (68) of the measuring cell (4).

## Revendications

1. Dispositif de mesure à ultrasons destiné à contrôler la rotondité du contour de surface d'une pièce (2), comportant une cellule de mesure (4), qui, pour être enfilée sur la pièce (2), est munie d'un logement et qui peut tourner autour du corps (2), un dispositif (16) de palpage mécanique orientable, monté dans la cellule de mesure et destiné à transformer le contour de surface en une orientation d'une surface réfléchissante (10) montée sur le dispositif de palpage (6) et une tête de contrôle (12) à ultrasons, montée de façon fixe dans la cellule de mesure (4) en face de la surface réfléchissante (10).

2. Dispositif de mesure à ultrasons selon la revendication 1, caractérisé en ce qu'il est prévu des moyens (42, 43, 44) d'application de la cellule de mesure (4) sur une partie de la surface de la pièce (2) située en face du dispositif (6) de palpage.

3. Dispositif de mesure à ultrasons selon la revendication 1 ou 2, caractérisé en ce que le dispositif (6) mécanique de palpage comprend un levier palpeur (62) qui peut être appliqué par une tige de palpage (64) à la surface de la pièce (2) et qui est monté élastiquement à basculement par rapport à un axe (63) parallèle à l'axe du mouvement de rotation de la cellule de mesure.

4. Dispositif de mesure à ultrasons selon la revendication 1 ou 2, caractérisé en ce que le dispositif (6) de palpage comprend un élément de palpage (66) susceptible d'être déplacé de façon linéaire.

5. Dispositif de mesure à ultrasons selon la revendication 4, caractérisé en ce que l'élément de palpage (66) est monté de façon à pouvoir être déplacé de façon linéaire dans des gorges (68) de la cellule de mesure (4).
